# EUROPÄISCHE PATENTSCHRIFT

(11) **EP 0 728 873 B1**
(45) Veröffentlichungstag und Bekanntmachung des Hinweises auf die Patenterteilung: **29.04.1998**
(21) Anmeldenummer: 96102120.1
(22) Anmeldetag: 14.02.1996
(51) Int. Cl.: E02D 29/12, H02G 9/10

(54) **Vorrichtung zur Unterbringung der Baugruppen von aktiven und passiven Knotenpunkten fernmeldetechnischer Anlagen**
Sheltering device for active and passive connection components of telecommunication equipment
Dispositif d'abri pour composants de connexions actives et passives d'installations de télécommunication

(30) Priorität: 22.02.1995 DE 29502938 U
(43) Veröffentlichungstag der Anmeldung: 28.08.1996
(73) Patentinhaber: ALCATEL ALSTHOM COMPAGNIE GENERALE D'ELECTRICITE, 75008 Paris (FR)
(72) Erfinder: Stieb, Werner, Dipl.-Ing., D-31655 Stadthagen (DE); Grajewski, Franz, Dr.-Ing., D-31655 Stadthagen (DE)
(74) Vertreter: Mende, Eberhard, Dipl.-Ing.

(56) Entgegenhaltungen:
- DE-A- 3 500 659
- DE-U- 9 419 491
- GB-A- 1 596 061
- US-A- 4 879 771

## Beschreibung

Die Erfindung betrifft eine Vorrichtung zur Unterbringung der Baugruppen von aktiven und passiven Knotenpunkten fernmeldetechnischer Anlagen nach dem Oberbegriff des Anspruchs 1.

Aus dem DE-GM 94 02 158 ist ein Gehäuse in Unterflurausführung bekannt, welches zur Aufnahme gegen Witterungseinflüsse empfindlicher Elektronik dient. Das Gehäuse weist ein mechanisch stabiles Gehäuse aus Beton mit einem abnehmbaren Deckel sowie einen im Gehäuse gelagerten topfartigen Behälter auf. Der Behälter besitzt einen zylindrischen Einsatz, der unter Bildung eines Spaltes in dem topfartigen Behälter angeordnet ist. Der Behälter ist mit einem Deckel feuchtigkeitsdicht verschlossen. Die Elektronik befindet sich bei diesem Unterflurbehälter in dem Einsatz innerhalb des Behälters.

Nachteilig bei dem eingangs erwähnten zweischaligen Unterflursystem mit einem Betonaußenbehälter und einem zweischaligen Kunststoffinnenbehälter sind das Gewicht in Bezug auf den Transport und die Montage sowie die hohen Systemkosten wegen des zweischaligen Aufbaus.

Aus der DE- 41 40 701 C1 ist ein Unterflurbehälter bekannt, der bis auf den oberen Bereich im Erdreich eingegraben ist. Der obere Bereich ist mit einem Deckel verschließbar. Der Behälter ist im oberen Bereich von einem Aufnahmering umgeben, der durch einen Schachtdeckel verschließbar ist. Der Aufnahmering ist offensichtlich wegen der auftretenden Verkehrslasten aus Beton gefertigt. Über den Werkstoff für den Behälter sind keine Aussagen gemacht.

Aus dem DE-GM 94 19 491 ist eine Vorrichtung zur Unterbringung der Baugruppen von aktiven und passiven Knotenpunkten fernmeldetechnischer Anlagen zur Verlegung im Erdreich bekannt, welche aus einem Behälter sowie einer im Behälter untergebrachten herausnehmbaren Halterung für Baugruppen besteht. Der Behälter weist einen ersten hohlen Bereich und einen zu einem Ende hin sich verjüngenden Bereich auf, an den sich ein zweiter hohler Bereich anschließt. Der Behälter ist mit einem Deckel verschlossen, der gleichzeitig als Gehwegdeckel dient.

Diesen Systemen ist gemeinsam, daß der Transport der Unterflurbehälter zum Einsatzort wegen der Sperrigkeit des Behälters bzw. wegen der Vielzahl der Teile recht aufwendig ist. Von daher sind beide Systeme verhältnismäßig teuer..

Ein weiterer Nachteil der beiden Systeme besteht noch darin, daß sich eine Anpassung an das Niveau des Gehweges recht aufwendig gestaltet.

Der vorliegenden Erfindung liegt von daher die Aufgabe zugrunde, eine Vorrichtung zur unterirdischen Unterbringung von nachrichtentechnischen Bauteilen bereitzustellen, welche in der Höhe sowie der Neigung einfach an das Niveau bzw. das Gefälle eines Gehwegs anpaßbar ist.

Diese Aufgabe wird bei einer Vorrichtung der bekannten Art durch die im Kennzeichen des Anspruchs 1 erfaßten Merkmale gelöst.

Bei der Erfindung wird im Gegensatz zu den eingangs zitierten Dokumenten eine einschalige Bauweise bevorzugt, d. h. die auf den Behälter einwirkenden Kräfte müssen aufgefangen werden und die Dichtheit des Behälters muß gewährleistet sein.

Ein wesentlicher Vorteil der Erfindung ist, daß das in einem Magerbetonbett eingegossene Rohr als Auflager für den Behälter dient. Durch Abtrennen eines bestimmten Rohrabschnitts kann der Behälter so gelagert werden, daß sein Gehwegdeckel mit dem Niveau des Gehwegs abschließt. Durch Ausrichten des Behälters aus der Vertikallage läßt sich dieser an jedes Gefälle des Gehweges anpassen.

Weitere vorteilhafte Ausgestaltungen sind in den Unteransprüchen erfaßt.

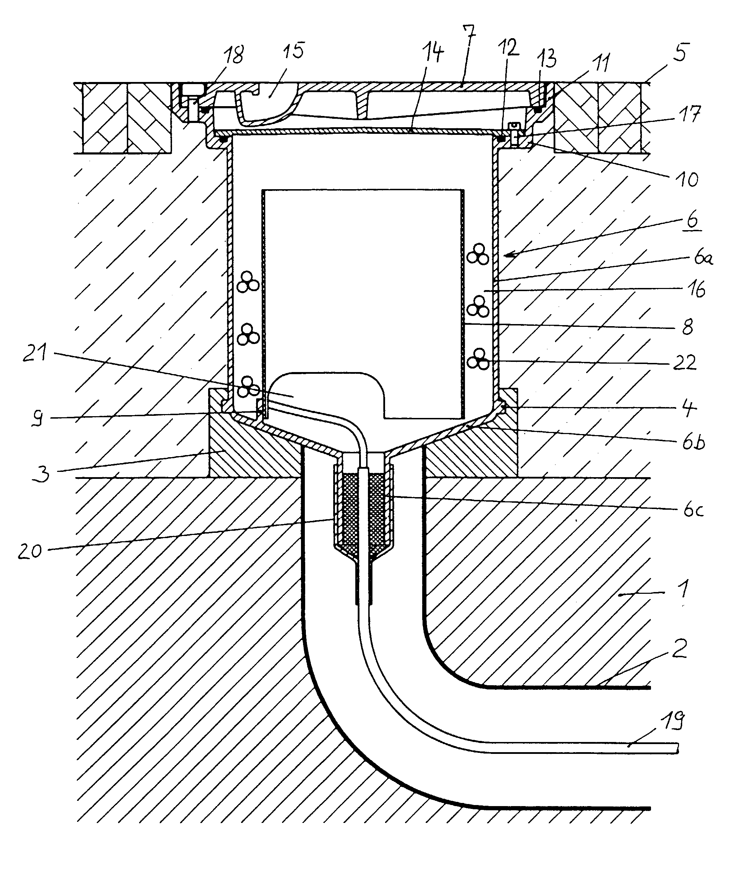

Die Erfindung ist anhand des in der Figur schematisch dargestellten Ausführungsbeispiels näher erläutert.

Der Behälter 6 ist ein Hohlkörper, vorzugsweise in rotationssymmetrischer Ausführung. Er ist in seiner bevorzugten Ausführungsform aus Gußeisen hergestellt, jedoch sind auch andere Herstellungsarten, wie z. B. Aluminiumguß, aber auch glasfaserverstärkter Kunststoff denkbar.

Der Behälter 6 weist einen ersten hohlzylindrischen Bereich 6a, einen konisch zulaufenden Bereich 6b und einen sich daran anschließenden zweiten hohlzylindrischen Bereich 6c auf.

Im Innern des Behälters 6 befindet sich ein Innenrohr 8, welches an z. B. drei sich über einen Winkel von 60 ° erstreckenden Segmenten 9, von denen nur eines sichtbar ist, befestigt ist. Diese Segmente 9 bilden ein Teil mit dem Behälter 6.

Der Innenraum des Innenrohres 8 dient zur Aufnahme der nicht dargestellten Halterungen für die Baugruppen. Der zwischen dem Innenrohr 8 und dem zylindrischen Bereich 6a des Behälters 6 befindliche Ringspalt 16 ist für einen Kabel- oder Adernvorrat 22 vorgesehen.

Eine umlaufende Wulst 4 bildet mit dem Behälter 6 ebenfalls ein Teil. Der Vorteil dieser Wulst 4 wird weiter unten erläutert.

Am oberen Rand des Behälters 6 sind eine erste Erweiterung 10 mit einer umlaufenden Ringnut 12 sowie eine zweite Erweiterung 11 ebenfalls mit einer umlaufenden Ringnut 13 vorgesehen. In beiden Ringnuten 12 und 13 ist je eine nicht näher bezeichnete Dichtung, z. B. in Form eines Dichtungsringes untergebracht. Die jeweilige Dichtung kann jedoch auch in einer entsprechenden Ringnut im jeweiligen Deckel vorgesehen sein.

Auf der Erweiterung 10 liegt ein Deckel 14 aus Grauguß, der mit Schraubbolzen 17 an der Erweiterung 10 befestigt ist. Durch den Deckel 14 ist im Zusammenwirken mit der Dichtung in der Ringnut 12 und den Schraubbolzen 17 sicherzustellen, daß der Behälter 6 druckdicht verschlossen ist und einen Innendruck von 0,05 bis 1,5 bar sicher abdichtet.

Auf der zweiten Erweiterung 11 liegt der Gehwegdeckel 7 auf, der über Schraubbolzen 18 auf der Erweiterung 11 festgelegt ist und mittels einer in der Ringnut 13 vorgesehenen Dichtung den Behälter 6 gegen Eintritt von Feuchtigkeit abdichtet. Eine im Gehwegdeckel 7 vorgesehene Griffmulde 15 erleichtert das Abnehmen des Deckels 7. Der Gehwegdeckel 7 soll möglichst ohne Überstände mit der Wegoberfläche abschließen.

Die Montage des Unterflurbehälters läuft folgendermaßen ab:

Zunächst wird ein Fundament 1, z. B. aus Magerbeton in einer vorgegebenen Tiefe gegossen. Das Fundament 1 schließt ein Rohr 2, vorzugsweise aus Polyvinylchlorid mit einem Durchmesser von z. B. 100 mm ein. Das Rohr 2 ragt einige Zentimeter aus dem Fundament 1 heraus. Das in den Behälter 6 einzuführende Kabel 19, z. B. ein Bündel aus einem herkömmlichen Nachrichtenkabel, einem Stromversorgungskabel und einem Lichtwellenleiterkabel, wird vor dem Gießen des Fundaments 1 durch das Rohr 2 hindurchgeführt. Nach dem Aushärten des Magerbetons wird der Behälter 6 auf das freie Ende des Rohres 2 aufgesetzt. Durch Kürzen des Rohres 2 kann der Gehwegdeckel 7 exakt an das Niveau des Gehweges 5 angepaßt werden. Verläuft der Gehweg 5 mit Gefälle, kann dies durch schräges Aufsetzen des Behälters 6 auf das Rohr 2 ausgeglichen werden. Um das Rohr 2, den Bereich 6b und einen Teil des Bereiches 6a wird ein Mörtelbett 3 gegossen. Hierfür wird eine Schalung nach Art einer Springform bevorzugt. Die Wulst 4 verhindert ein Aufschwimmen des Behälters 6.

Vor dem endgültigen Aufsetzen des Behälters 6 auf das Rohr 2 wird auf den Bereich 6c ein Schrumpfschlauch 20 bzw. im Falle, daß mehrere Kabel in den Behälter 6 eingeführt werden müssen, eine nicht dargestellte Aufteilungskappe aufgesteckt und auf den Bereich 6c und das Kabel 19 geschrumpft, und damit der Spalt zwischen Kabel 19 und dem Bereich 6c abgedichtet.

Nach dem Setzen des Schrumpfschlauchs 20 kann von oben in den Bereich 6c ein Gießharz eingegossen werden, welches das Kabel 19 in dem Bereich 6c festlegt und eine Zugentlastung des Kabels 19 sowie eine Abdichtung nach unten bewirkt. Befindet sich die Absetzstelle des Kabels 19 im Bereich 6c, dient das Gießharz gleichzeitig dazu, das Kabel 19 am Ende abzuschließen.

Das Einführen des Kabels 19 in den Behälter 6 sowie das Abdichten mittels Schrumpfschlauch 20 bzw. Aufteilungskappe und Abdichten mit Gießharz erfolgt vorteilhafterweise bereits im Werk, so daß ein vorkonfektionierter Behälter 6 angeliefert wird, dessen Kabel 19 an die an der Baustelle vorhandenen Kabel angeschlossen werden müssen.

Damit der die Baugruppe tragende Baugruppenträger aus dem Behälter 6 zu Meßzwecken bei der Fehlerortung entnommen werden kann, ist die freigelegte Kabelseele 22 in mehreren Windungen in dem Ringspalt 16 untergebracht.

Eine Öffnung 21 ermöglicht die Einführung der Adern der Kabelseele 22 in das Innere des Innenrohres 8. Abschließend werden die beiden Deckel 14 und 7 montiert und die Baugrube mit Füllsand verfüllt.

Der Behälter 6 besteht mit besonderem Vorteil aus Grauguß. Dadurch wird ein geringeres Gewicht gegenüber der zweischaligen Bauweise und damit ein vereinfachter Transport und eine vereinfachte Montage möglich. Der Behälter 6 ist in der Lage die auf ihn einwirkenden Kräfte des Erdreichs sowie Verkehrslasten aufzunehmen. Ein besonderer Vorteil besteht jedoch darin, daß die durch die fernmeldetechnischen Baugruppen erzeugte Verlustwärme wegen der geringen Wanddicke und der guten Wärmeleitfähigkeit von Grauguß schnell ins benachbarte Erdreich abgeführt werden kann.

## Patentansprüche

1. Vorrichtung zur Unterbringung der Baugruppen von aktiven und passiven Knotenpunkten fernmeldetechnischer Anlagen zur Verlegung im Erdreich, mit einem Behälter (6), der mit einem Deckel (7) verschlossen ist, der gleichzeitig als Gehwegdeckel dient, sowie einer im Behälter (6) untergebrachten herausnehmbaren Halterung für die Baugruppen, wobei der Behälter (6) einen ersten hohlen Bereich (6a) und einen zu einem Ende hin auslaufenden, sich verjüngenden Bereich (6b) aufweist und sich ein zweiter hohler Bereich (6c) an den auslaufenden Bereich (6b) anschließt, dadurch gekennzeichnet, daß der sich verjüngenden Bereich (6b) konisch oder halbrund ist und daß die Außenwandung des sich verjüngenden Bereichs (6b) auf einem in einem Fundament (1) eingegossenen Rohr (2), welches aus dem Fundament (1) herausragt, derart ruht, daß der Behälter (6) in der Höhe sowie der Neigung an das Niveau bzw. das Gefälle eines Gehweges anpaßbar ist, wobei der zweite hohle Behälterbereich (6c) in das Rohr (2) eingeführt ist.

2. Vorrichtung nach Anspruch 1, dadurch gekennzeichnet, daß der erste hohle Bereich (6a) und der zweite hohle Bereich (6c) hohlzylindrisch sind.

3. Vorrichtung nach Anspruch 1 oder 2, dadurch gekennzeichnet, daß der Teil des aus dem Fundament (1) herausragenden Rohres (2), der konisch oder halbrund auslaufende Bereich (6b) sowie ein kurzes Stück des ersten hohlzylindrischen Bereiches (6a) von einem Mörtelbett (3) umgeben sind.

4. Vorrichtung nach einem der Ansprüche 1 bis 3, dadurch gekennzeichnet, daß im Übergangsbereich vom ersten hohlzylindrischen Bereich (6a) zum sich verjüngenden Bereich (6b) eine umlaufende Wulst (4) vorgesehen ist.

5. Vorrichtung nach einem der Ansprüche 1 bis 4, dadurch gekennzeichnet, daß der zwischen einem durch das Rohr (2) und dem zweiten hohlzylindrischen Bereich (6c) in das Innere des Behälters (6) der Versorgung der Baugruppen dienenden Kabel (19) und dem zweiten hohlzylindrischen Bereich (6c) befindliche Ringspalt mit einem auf dem Kabel (19) und dem zweiten hohlzylindrischen Bereich (6c) aufliegenden Schrumpfschlauch (20) abgedichtet ist.

6. Vorrichtung nach einem der Ansprüche 1 bis 5, dadurch gekennzeichnet, daß bei mehr als einem in das Innere des Behälters (6) eingeführten Kabel auf das freie Ende des zweiten hohlzylindrischen Bereiches (6c) eine sog. Finger- oder Aufteilungskappe aus wärmerückstellbarem Kunststoff aufgeschrumpft ist.

7. Vorrichtung nach einem der Ansprüche 5 oder 6, dadurch gekennzeichnet, daß der zwischen dem oder den Kabeln (10) und dem zweiten hohlzylindrischen Bereich (6c) verbleibende Hohlraum nach dem Aufbringen des Schrumpfschlauches (20) bzw. der Fingerkappe mit Gießharz ausgefüllt ist.

8. Vorrichtung nach einem der Ansprüche 1 bis 7, dadurch gekennzeichnet, daß im Innern des Behälters (6) ein Rohr (8) konzentrisch gehaltert ist, dessen Innenraum zur Aufnahme der Halterungen für die Baugruppen dient.

9. Vorrichtung nach Anspruch 8, dadurch gekennzeichnet, daß das Rohr (8) an drei Segmenten (9), welche im sich verjüngenden Bereich (6b) befindlich sind, befestigt ist.

10. Vorrichtung nach Anspruch 8 oder 9, dadurch gekennzeichnet, daß der zwischen dem Rohr (8) und dem ersten hohlzylindrischen Bereich (6a) befindliche Ringspalt (16) zur Aufnahme des Kabel- bzw. Adervorrats (22) vorgesehen ist.

11. Vorrichtung nach einem der Ansprüche 8 bis 10, dadurch gekennzeichnet, daß Baugruppen mittels sogenannter Baugruppenträger im Innern des Rohres (8) angeordnet sind.

12. Vorrichtung nach einem der Ansprüche 1 bis 11, dadurch gekennzeichnet, daß sich am oberen Rand des Behälters (6) eine erste flanschartige Erweiterung (10) und an diese eine zweite flanschartige Erweiterung (11) anschließt, daß beide flanschartigen Erweiterungen (10,11) eine umlaufende Nut (12,13) mit einer eingelegten Ringdichtung aufweisen und daß auf der ersten flanschartigen Erweiterung (10) ein den Hohlkörper (6) druckdicht abschließender Deckel (14) befestigt ist und daß auf der zweiten flanschartigen Erweiterung (11) der Gehwegdeckel (7) aufliegt.

13. Vorrichtung nach Anspruch 12, dadurch gekennzeichnet, daß der Gehwegdeckel (7) mittels zumindest zweier Schraubbolzen an der zweiten flanschartigen Erweiterung (11) befestigt ist.

14. Vorrichtung nach Anspruch 12 oder 13, dadurch gekennzeichnet, daß der Gehwegdeckel (7) eine nach außen weisende Griffmulde (15) besitzt.

15. Vorrichtung nach einem der Ansprüche 1 bis 14, dadurch gekennzeichnet, daß der Behälter (6,6a,6b,6c) aus Metall vorzugsweise aus Grauguß besteht.

16. Vorrichtung nach einem der Ansprüche 1 bis 15, dadurch gekennzeichnet, daß der Deckel (14) aus Grauguß besteht.

## Claims

1. Device for accommodating the assemblies pertaining to active and passive nodes of telecommunications installations for laying in the ground, with a container (6) that is closed with a cover (7) which serves at the same time as a footpath cover, and also with a removable holding device for the assemblies which is accommodated in the container (6), whereby the container (6) comprises a first hollow region (6a) and a tapering region (6b) extending towards one end and a second hollow region (6c) adjoins the tapering region (6b), characterised in that the tapering region (6b) is conical or hemispherical and in that the outer wall of the tapering region (6b) rests on a tube (2) that is cast in a foundation (1) and that projects from the foundation (1) in such a manner that the container (6) can be adapted in height and also in inclination to the level or the gradient of a footpath, the second hollow container region (6c) being introduced into the tube (2).

2. Device according to Claim 1, characterised in that the first hollow region (6a) and the second hollow region (6c) are of hollow cylindrical design.

3. Device according to Claim 1 or 2, characterised in that the part of the tube (2) projecting from the foundation (1), the conically or hemispherically tapering region (6b) and also a short part of the first hollow cylindrical region (6a) are surrounded by a mortar bed (3).

4. Device according to one of Claims 1 to 3, characterised in that a circumferential bead (4) is provided in the transitional region from the first hollow cylindrical region (6a) to the tapering region (6b).

5. Device according to one of Claims 1 to 4, characterised in that the annular gap located between a cable (19) passing through the tube (2) and the second hollow cylindrical region (6c) into the interior of the container (6), serving to supply the assemblies, and the second hollow cylindrical region (6c) is sealed off with a heat-shrinkable sleeve (20) resting on the cable (19) and the second hollow cylindrical region (6c).

6. Device according to one of Claims 1 to 5, characterised in that in the case where more than one cable is introduced into the interior of the container (6) a so-called finger cap or distributing cap made of heat-restorable plastic is shrunk onto the free end of the second hollow cylindrical region (6c).

7. Device according to one of Claims 5 or 6, characterised in that the hollow space remaining between the cable or cables (10) and the second hollow cylindrical region (6c) is filled up with casting resin after application of the heat-shrinkable sleeve (20) or of the finger cap.

8. Device according to one of Claims 1 to 7, characterised in that inside the container (6) a tube (8) is retained concentrically, the interior space of which serves to receive the holding devices for the assemblies.

9. Device according to Claim 8, characterised in that the tube (8) is secured to three segments (9) located in the tapering region (6b).

10. Device according to Claim 8 or 9, characterised in that the annular gap (16) located between the tube (8) and the first hollow cylindrical region (6a) is provided for the purpose of receiving the supply of cables or wires (22).

11. Device according to one of Claims 8 to 10, characterised in that assemblies are arranged inside the tube (8) by means of so-called subracks.

12. Device according to one of Claims 1 to 11, characterised in that a first flange-type extension (10) adjoins the upper edge of the container (6) and a second flange-type extension (11) adjoins said first flange-type extension, in that both flange-type extensions (10, 11) comprise a circumferential groove (12, 13) with an inserted ring seal and in that a terminating cover (14) closing off the hollow body (6) in pressure-tight manner is secured to the first flange-type extension (10) and in that the footpath cover (7) rests on the second flange-type extension (11).

13. Device according to Claim 12, characterised in that the footpath cover (7) is secured to the second flange-type extension (11) by means of at least two screw bolts.

14. Device according to Claim 12 or 13, characterised in that the footpath cover (7) possesses a recessed grip (15) pointing outwards.

15. Device according to one of Claims 1 to 14, characterised in that the container (6, 6a, 6b, 6c) consists of metal, preferably of grey cast iron.

16. Device according to one of Claims 1 to 15, characterised in that the cover (14) consists of grey cast iron.

## Revendications

1. Dispositif à poser dans le sol pour y loger les composants des noeuds actifs et passifs des installations de télécommunication, comprenant un conteneur (6), qui est fermé par un couvercle (7), qui sert en même temps de couvercle sur le trottoir, ainsi qu'un support pour composants, monté dans le conteneur (6) duquel il peut être retiré, le conteneur (6) étant formé par une première zone creuse (6a) et une zone (6b) qui se rétrécit vers une extrémité, et une deuxième zone creuse (6c) prolongeant la zone se rétrécissant (6b), caractérisé en ce que la zone se rétrécissant (6b) est une zone conique ou semi-circulaire et en ce que la paroi extérieure de la zone se rétrécissant (6b) repose sur un tube (2), coulé dans une fondation (1) et en saillie au-dessus de la fondation (1), de telle sorte qu'il est possible d'ajuster la hauteur et l'inclinaison du conteneur (6) avec le niveau et la pente d'un trottoir, la deuxième zone creuse (6c) étant insérée dans le tube (2).

2. Dispositif selon la revendication 1, caractérisé en ce que la première zone creuse (6a) et la deuxième zone creuse (6c) forment un cylindre creux.

3. Dispositif selon la revendication 1 ou 2, caractérisé en ce que la partie du tube (2) en saillie au-dessus de la fondation (1), la zone se rétrécissant (6b) , de forme conique ou semi-circulaire, ainsi qu'une petite partie de la première zone creuse cylindrique (6a) sont enrobées dans un lit de mortier (3).

4. Dispositif selon l'une quelconque des revendications 1 à 3, caractérisé en ce qu'il est prévu de réaliser un bourrelet (4) périphérique dans la zone de transition entre la première zone creuse cylindrique (6a) et la zone se rétrécissant (6b).

5. Dispositif selon l'une quelconque des revendications 1 à 4, caractérisé en ce que la fente annulaire située entre un câble (19), introduit à l'intérieur du conteneur (6) par le tube (2) et la deuxième zone creuse cylindrique (6c), et la deuxième zone creuse cylindrique (6c), est rendue étanche par un tuyau flexible rétrécissable (20), posé autour du câble (19) et de la deuxième zone creuse cylindrique (6c).

6. Dispositif selon l'une quelconque des revendications 1 à 5, caractérisé en ce qu'une gaine à ramifications ou une gaine de distribution, réalisée en matière plastique thermorétractable, est resserrée sur l'extrémité libre de la deuxième zone creuse cylindrique (6c), s'il est nécessaire d'introduire plus d'un câble à l'intérieur du conteneur (6).

7. Dispositif selon la revendication 5 ou 6, caractérisé en ce que l'espace vide subsistant entre le ou les câbles (19) et la deuxième zone creuse cylindrique (6c) est comblé avec une résine de coulée, après la pose du tuyau flexible rétrécissable (20) ou de la gaine à ramifications.

8. Dispositif selon l'une quelconque des revendications 1 à 7, caractérisé en ce qu'un tube (8) concentrique est maintenu à l'intérieur du conteneur (6), l'intérieur dudit tube étant destiné à recevoir les supports pour les composants.

9. Dispositif selon la revendication 8, caractérisé en ce que le tube (8) est fixé contre trois segments (9), qui sont situés dans la zone se rétrécissant (6b).

10. Dispositif selon la revendication 8 ou 9, caractérisé en ce que la fente annulaire (16) entre le tube (8) et la première zone creuse cylindrique (6a) est prévue pour stocker les câbles ou les conducteurs (22).

11. Dispositif selon l'une quelconque des revendications 8 à 10, caractérisé en ce que des composants sont disposés sur des supports pour composants à l'intérieur du tube (8).

12. Dispositif selon l'une quelconque des revendications 1 à 11, caractérisé en ce qu'un premier évasement (10) en forme de collerette prolonge le bord supérieur du conteneur (6) et est suivi par un deuxième évasement (11) en forme de collerette, en ce que chacun des deux évasements (10, 11) en forme de collerette est muni d'une rainure périphérique (12, 13) dans laquelle est logé un joint torique d'étanchéité et en ce qu'un couvercle (14) est fixé sur le premier évasement (10) en forme de collerette pour fermer hermétiquement le corps creux (6) et en ce que le couvercle sur le trottoir (7) est posé sur le deuxième évasement (11) en forme de collerette.

13. Dispositif selon la revendication 12, caractérisé en ce que le couvercle sur le trottoir (7) est fixé contre le deuxième évasement (11) en forme de collerette à l'aide d'au moins deux boulons filetés.

14. Dispositif selon la revendication 12 ou 13, caractérisé en ce que le couvercle sur le trottoir (7) est muni d'une cavité de maniement (15), orientée vers l'extérieur.

15. Dispositif selon l'une quelconque des revendications 1 à 14, caractérisé en ce que le conteneur (6, 6a, 6b, 6c) est en métal, de préférence en fonte grise.

16. Dispositif selon l'une quelconque des revendications 1 à 15, caractérisé en ce que le couvercle (14) est en fonte grise.
